# EUROPÄISCHE PATENTSCHRIFT

(11) **EP 3 893 628 B1**
(45) Veröffentlichungstag und Bekanntmachung des Hinweises auf die Patenterteilung: **31.07.2024**
(21) Anmeldenummer: 19828604.9
(22) Anmeldetag: 11.12.2019
(51) Int. Cl.: A01G 13/02, A01G 13/10, A01M 29/34

(54) **VORRICHTUNG UND VERFAHREN ZUM SCHUTZ VON BUCHSBÄUMEN VOR DEM BUCHSBAUMZÜNSLER**
DEVICE AND METHOD FOR PROTECTING BOX TREES FROM THE BOX TREE MOTH
DISPOSITIF ET PROCÉDÉ DE PROTECTION DE BUIS CONTRE LA PYRALE DU BUIS

(30) Priorität: 11.12.2018 DE 102018131677
(43) Veröffentlichungstag der Anmeldung: 20.10.2021
(73) Patentinhaber: JaViAs GmbH, 83071 Stephanskirchen (DE)
(72) Erfinder: ASSBLICHER, Jacqueline, 83071 Stephanskirchen (DE)
(74) Vertreter: Straus, Alexander
(86) Internationale Anmeldenummer: PCT/EP2019/084702
(87) Internationale Veröffentlichungsnummer: WO 2020/120600

(56) Entgegenhaltungen:
- WO-A1-2016/135533
- DE-A1- 102005 022 067
- US-A- 5 451 239
- US-A1- 2014 041 285
- US-A1- 2016 015 018

## Beschreibung

Die vorliegende Erfindung betrifft eine Vorrichtung zum Schutz von Buchsbäumen bzw. Buchssträuchern vor dem Befall mit Buchsbaumzünslern. Die vorliegende Erfindung betrifft insbesondere ein Verfahren zum Schutz von Buchsbäumen bzw. Buchssträuchern vor dem Buchsbaumzünsler, bei dem ein mit Vorsprüngen versehener Grundkörper über der, in dem äußeren Geäst der Pflanze bzw. durch den Pflanzenbewuchs in das Erdreich angeordnet wird.

### Hintergrund der Erfindung

Der Buchsbaumzünsler (lat. Cydalima perspectalis) ist ein ostasiatischer Kleinschmetterling aus der Familie der Crambidae, der zu Beginn des 21. Jahrhunderts nach Mitteleuropa eingeschleppt wurde und sich als grosser Schädling für Buchsbäume erwiesen hat. Er wurde erstmals im Frühjahr 2006 in Deutschland bemerkt und in den folgenden Jahren auch in der Schweiz, den Niederlanden, Frankreich, Großbritannien und Österreich festgestellt. Dessen Auftreten wurde zwischenzeitlich auch aus Belgien, der Türkei, der Slowakei, Ungarn und Rumänien gemeldet.

Der Buchsbaumzünsler ist ein weisser Falter mit schwarzem Muster, dessen Vorderflügel in den meisten Fällen ebenfalls weiß mit braunen Außenrändern sind. Die Falter, deren Flügelspannweite ca. 40 - 50 mm beträgt, sitzen vornehmlich an der Unterseite der Blätter des Buchsbaums. Nachdem sich die männlichen mit den weiblichen Faltern gepaart haben, fliegen die Weibchen zwecks Eiablage vorzugsweise zu noch nicht befallenen Buchsbäumen und legen ihre blassgelben und linsenförmigen Eier insbesondere an der Unterseite der äußeren Blätter des Gewächses ab.

Aus diesen Eiern schlüpfen nach ca. 3 Tagen grüne, schwarz gepunktete Raupen, welche während der folgenden ca. zehn Wochen bis zu sieben Larvenstadien durchlaufen und bis zu 5cm lang werden können. Je nach Umgebungstemperatur kann sich die Entwicklungszeit beschleunigen, so dass bei günstigen Bedingungen die sieben Larvenstadien bereits nach ca. 3 Wochen abgeschlossen sein können. Nach dem Durchlaufen der Larvenstadien verpuppen sich die Raupen in Kokons und werden nach ca. einer Woche wiederum zu Faltern.

Die Lebenszeit der Falter selbst beträgt lediglich bis zu neun Tage, in denen die Weibchen durch die Eiablage an vorzugsweise nicht-befallenen Pflanzen maßgeblich für die Verbreitung verantwortlich sind. Von Frühjahr bis Spätsommer entsteh ca. alle 2 bis 3 Monate eine neue Buchsbaumzünsler-Generation, so dass sich pro Jahr bis zu vier Buchsbaumzünslergenerationen entwickeln können.

Der eigentliche Schädling ist die Raupe, die während ihrer Entwicklung zuerst die Blätter des Buchsbaums und anschließend sogar die Rinde an den Ästen frisst. Dabei sterben alle Pflanzenteile des Buchsbaums oberhalb der Fraßstelle ab, was visuell durch ein im wesentliches beige-gelblich Erscheinungsbild der Pflanze zu erkennen ist. Die Buchsbäume haben schlussendlich kaum noch Blätter und sind von den Raupen häufig teilweise eingesponnen.

Die durch den Schädling betroffene Buchsbaumsorten sind die in Deutschland beheimateten Arten "Gewöhnlicher Buchsbaum" (Buxus sempervirens) und der eher selten vorkommende "Kleinblättrige Buchsbaum" (Buxus microhylla), die bei starkem Befall vollends absterben.

Ein Befall durch den Buchsbaumzünsler ist im ersten Stadium nur schwer zu erkennen, da die Eier meist an den unteren Ästen des Buchsbaums abgelegt werden. Die Schäden sind anfänglich gering und normalerweise erst bei genauer Betrachtung festzustellen. Bei fortschreitender Entwicklung der Raupen wird auch das Innere des Buchsbaums befallen, wobei aufgrund der im Allgemeinen dicht bewachsenen Äste und dichten Verzweigung es auch hier schwierig ist, einen Befall zu erkennen.

Aus diesem Grunde schreitet der Befall anfänglich auch unentdeckt weiter, wobei nach und nach auch die Außenbereiche der Pflanze vom Schädling erreicht werden. Erst zu diesem späten Zeitpunkt ist der Befall problemlos zu erkennen. Zahlreiche Blätter wurden abgefressen und die Raupe des Buchsbaumzünslers beginnt damit, die Rinde der Äste oder sogar schon jüngere Zweige des Buchsbaums zu fressen.

Ein Buchsbaum kann je nach Größe einen einmaligen Befall durch den Buchsbaumzünsler unter ggf. Einbüßung seines Erscheinungsbildes überleben. Einen erneuten Befall überstehen die Pflanzen in den meisten Fällen jedoch nicht.

Da Buchsbäume langsam wachsende und sehr wertvolle Pflanzen der Gartenarchitektur sind, wurden bereits einige Mittel zur Bekämpfung des Buchsbaumzünslers entwickelt, dies im Hinblick darauf, da der Buchsbaumzünsler in westlichen Ländern keine natürlichen Feinde hat und sich somit ungestört ausbreiten kann.

Die einfachste angewendete Maßnahme ist die optische Begutachtung der Buchsbäume mit ggf. erfolgender manueller Abnahme der Raupen von den Pflanzen. Dies ist jedoch im Wesentlichen nur bei kleineren Buchsbäumen in Gärtnereien oder Baumärkten durchführbar, in denen sich die Pflanzen temporär und vorzugsweise in einem im Wesentlichen gegenüber der Umwelt abgesperrten Areal befinden. Bei größeren Pflanzen in der freien Natur ist dies schwierig durchzuführen, da einerseits jederzeit ein Befall vorkommen kann, andererseits da bei einem Buchsbaum der Blick in sein Inneres aufgrund des dichten Geästs bzw. Bewuchses erschwert ist.

Eine andere Maßnahme stellt die Ausbringung biologischer Insektizide dar, wie Bacillus thuringiensis. Der Mikroorganismus schädigt die Raupen, während sich diese noch in ihren Anfangsstadien befinden, was beinhaltet, dass das biologische Mittel zu einem bestimmten Zeitpunkt nach der Eiablage ausgebracht werden muss, welche jedoch in den meisten Fällen unentdeckt bleibt.

Darüber hinaus wurden Pheromon-Fallen zum Schutz vor dem Buchsbaumzünsler vorgeschlagen, welche männliche Falter anlocken, deren Befruchtungsfähigkeit beeinträchtigen und damit die Fortpflanzungsmöglichkeiten einschränken sollen. Diese Fallen sind jedoch kostenintensiv und in den meisten Fällen aufgrund von Umgebungseinflüssen wie Wind und Regen nicht ausreichend, um die Verbreitung des Buchsbaumzünslers nachhaltig zu verhindern.

Auch chemische Insektizide, welche die Schädlinge abtöten, kamen zum Einsatz. Obwohl hier die letale Bandbreite im Vergleich mit dem vorstehenden biologischen Insektizid größer ist, muss auch hier das Ausbringen des chemischen Insektizids im Wesentlichen nach einem bereits aufgetretenen Befall erfolgen und in einer Art und Weise durchgeführt werden, dass die Schädlinge das Mittel aufnehmen. Nachteilig hier ist der blick-dichte Bewuchs des Buchsbaums, der oftmals ein Ausbringen des Insektizids in innere Bereiche der Pflanze davon erschwert oder sogar verhindert, dies insbesondere im Hinblick darauf, dass sich die Schädlinge in bestimmten Lebensabschnitten an der Unterseite der Blätter aufhalten. Des Weiteren sind derartige Mittel nur für eine bestimmte, von Umgebungsbedingungen, wie Temperatur und Nässe abhängigen, Zeit aktiv, so dass das Mittel erneut ausgebracht werden muss. Da Chemikalien für Mensch und die Umgebung generell nachteilig, sind derartige Mittel in den meisten Fällen nur bei einem immanent festgestellten Befall nützlich.

Eine weitere vorgeschlagene Form der Bekämpfung des Zünslers besteht darin, ein herkömmliches Netz über die Pflanze anzuordnen. Das Eindringen des Falters und dessen Eierablage wird dadurch nicht verhindert, auch nicht die Vernichtung des Buchsbaums, jedoch wird das Austreten des sich entpuppten Falters erschwert oder gar verhindert, so dass eine schnelle und starke Vermehrung des Tieres in diesem Gebiet aufgehalten werden kann. Dieses Ziel kann jedoch nur erreicht werden, soweit diese Vorgehensweise an allen in der Umgebung befindlichen Buchsbäumen angewandt wird.

Es besteht daher ein Bedarf nach einem Mittel zur Bekämpfung des Buchsbaumzünslers, welches einfach anzubringen ist und nachhaltig vor einem Befall der Pflanze durch den Buchsbaumzünsler schützt. Relevanter Stand der Technik ist US 2014/041285 A1, US 2016/015018 A1 und US 5 451 239 A.

### Zusammenfassung der Erfindung

Die vorliegende Erfindung betrifft eine Vorrichtung und ein Verfahren zur Bekämpfung des Buchsbaumzünslers. Die Erfindung wird durch die Ansprüche definiert.

Die Vorrichtung zur Bekämpfung des Buchsbaumzünslers besteht aus einer Grundstruktur, auf der in hinreichender Dichte und Anzahl Vorsprünge mit einer bestimmten Länge und Form vorgesehen sind. Das Verfahren zur Bekämpfung des Buchsbaumzünslers beinhaltet, Anbringen der mit Vorsprüngen versehenen Grundstruktur auf oder über der Oberfläche bzw. im peripheren Bereich oder im Inneren der Pflanze bis ins Erdreich.

Die Vorrichtung umfasst eine Grundstruktur, entweder ein netzartiger oder ein stabförmiger Aufbau, auf bzw. an dem in im Wesentlichen einer Richtung Vorsprünge mit einer bestimmten Länge angeordnet sind, so dass deren Enden einen Abstand von maximal 200 mm aufweisen. Die Länge der Vorsprünge ist lediglich durch die Handhabbarkeit der netzartigen oder stabförmigen Grundstruktur beim Anbringen an/ in der Pflanze beschränkt.

### Ausführliche Beschreibung der Erfindung

Während der Untersuchungen, die zu der vorliegenden Erfindung führten, wurde festgestellt, dass sich der Buchsbaumzünsler an Buchsbäumen mit hervorstehenden jungen blätterlosen Ästchen oder sonstigen von der Pflanzenoberfläche abstehenden Objekten zum Zwecke der Eiablage nicht niedergelassen hat. Dies war bei zugeschnittenen Buchsbäumen bzw. Pflanzen, wie beobachtet, der Fall.

Offensichtlich störten die hervorstehenden Ästchen den Anflug des Buchsbaumzünslers, da dessen Flügel bei Annäherung bzw. Kontakt mit dem herausstehenden Astwerk augenscheinlich beschädigt oder sogar zerstört wurden, mit der Folge dass der Falter auf den Boden abstürzte oder aufgrund fehlender Lande-Möglichkeit weiterflog.

Die vorliegende Erfindung stellt daher eine Vorrichtung zur Bekämpfung des Buchsbaumzünslers bereit, das durch eine Grundstruktur dargestellt ist, auf der im Wesentlichen in eine Richtung ausgerichtet Vorsprünge darauf vorgesehen sind, so dass deren der Grundstruktur abgewandte Enden einen Abstand von maximal 200 mm aufweisen.

Gemäß einer Ausführungsform weist die Grundstruktur einen netzartigen Aufbau auf, bei dem die Vorsprünge auf einer Seite des Aufbaus bzw. Netzes vorgesehen sind. Gemäß einer anderen Ausführungsform weist die Grundstruktur die Form eines Stabs auf, der in einem Winkel von ca. 90 ° Vorsprünge bzw. Vertiefungen zum Anbringen von Vorsprüngen aufweist.

Wird eine derartige Vorrichtung in, auf bzw. über einem Buchsbaum angeordnet, so wird durch die hervorstehenden Vorsprünge, die eine Art Abwehrstäbchen darstellen, verhindert, dass sich der Falter an der Pflanze zur Eiablage niederlassen kann.

Der Abstand der Enden der Vorsprünge voneinander beträgt erfindungsgemäß maximal 200 mm, was in etwa den Flugbereich darstellt, den der Falter offensichtlich bei seinem Anflug auf den Buchsbaum benötigt. Der Abstand kann daher in einem Bereich von ca. 30 - 200 mm liegen, vorzugsweise 40 - 200 mm, vorzugsweise 50 - 200 mm, vorzugsweise 60 - 200 mm. 70 - 200 mm. 80 - 200 mm, 90 - 200 mm oder 100 - 200 mm oder 120 - 200 mm oder 150 - 200 mm. Bevorzugte Abstände der Vorsprünge sind dabei 50, 60, 70, 80, 90 oder 100 mm.

Die Vorsprünge sind hinsichtlich ihrer Form und Länge nicht beschränkt. Die Länge der Vorsprünge wird nur durch die Handhabbarkeit des Aufbaus durch den Nutzer und der beabsichtigen Verwendung, z.B. Tiefe der Versenkung des netzartigen Grundkörpers in dem Buchsbaum mit verbleibenden hervorstehenden Vorsprüngen, beschränkt und kann beispielsweise bis zu ca. 500 mm betragen. Bevorzugte Längen liegen im Bereich von ca. 5 - 400 mm oder 5 - 300 mm, oder 10 - 300 mm, oder 15 - 300 mm, oder 20 - 300 mm, oder 30 - 300 mm oder 40 - 300 mm, oder 50 - 300 mm, oder 60 - 300 mm oder 70 - 300 mm oder 80 - 300 mm, oder 90 - 300 mm oder 100 - 300 mm. Bevorzugte Längen der Vorsprünge sind dabei 20, 30, 40, 50, 60, 70, 80, 90, 100, 110, 120, 130, 140 oder 150 mm.

Es ist klar, dass die Vorsprünge auf der Grundstruktur nicht alle die gleiche Länge aufweisen müssen. Ebenfalls ist es möglich, eine gezielte oder statistische Längenverteilung der Vorsprünge auf der Grundstruktur vorzusehen. In Hinblick auf eine gezielte Längenverteilung sind längere Vorsprünge insbesondere an Randbereichen des Netzes, die an den unteren Bereichen der Buchsbäume angeordnet werden, bevorzugt, da diese dort optisch weniger auffällig sind und der anfängliche Befall durch den Buchsbaumzünsler vorzugsweise an diesem Ort stattfindet.

Die Form der Vorsprünge ist ebenfalls nicht beschränkt. Die Vorsprünge können entlang deren Länge einen einheitlichen oder einen sich verändernden Durchmesser aufweisen, in Richtung auf das der Grundstruktur abgewandte Ende konisch zulaufen oder sich verbreitern oder auch beides, d.h. zuerst mit einem zunehmenden und dann einem abnehmenden Durchmesser aufweisen. Die Enden der Vorsprünge können dabei ebenfalls jede Form aufweisen, wie beispielsweise stumpf, spitz, T-förmig, X-förmig oder auch in Form eines Tellers oder einer Krone, deren Enden ebenfalls spitz sein können.

Gemäß einer bevorzugten Ausführungsform sind die Vorsprünge in Form eines länglichen Stäbchens ausgestaltet, mit vorzugsweise spitzen oder mit einer Krone versehenen Enden. Derartige Abwehrstäbchen lassen sich leicht auf der Grundstruktur anbringen und können mit ihrem spitzen Ende den anfliegenden Schädling stark schädigen.

Die Vorsprünge können starr oder flexibel ausgebildet sein, wobei sie im letztgenannten Fall individuell an die gewünschte Position gebogen werden können.

Der netzartige Aufbau, auf dem die Vorsprünge auf einer Seite vorgesehen sind, ist in seiner Art und Form selbst nicht beschränkt, mit der Maßgabe, dass die Vorsprünge in dem vorstehend aufgeführten Abständen voneinander darauf angeordnet werden können und der Aufbau eine strukturelle Integrität aufweist, die eine stabile Anordnung auf, in oder über dem Buchsbaum und eine tragende Ausrichtung der Vorsprünge ermöglicht.

Dies bedingt einerseits, dass der netzartige Grundkörper ausreichend flexibel sein muss, um eine Anordnung an, in oder über dem Buchsbaum zu ermöglichen, andererseits eine ausreichende Steifigkeit aufweisen, so dass die nach Anbringen des netzartigen Grundkörpers am, im oder über dem Buchsbaum nach außen vorstehenden Vorsprünge bzw. Abwehrstäbchen stabil in Richtung nach außen gehalten werden.

So muss insbesondere die Maschengröße des Netzes nicht mit dem Abstand der Vorsprünge einhergehen, dies im Hinblick darauf, dass größere Maschen eine leichtere Anbringung des netzartigen Aufbaus in dem Buchsbaum selbst, zurückversetzt von dem äußeren Blätterwerk erleichtert. Die Maschengrößer kann daher gewählt werden im Bereich von 30 x 30 cm oder 30 x 20 cm oder 20 x 20 cm oder 20 x 15 cm oder 15 x 15 cm oder 12 x 12 cm oder 10 x 12 cm oder 10 x 10 cm oder 10 x 8 cm oder 8 x 8 cm oder 8 x 7 cm oder 7 x 7 cm oder 7 x 6 cm oder 6 x 6 cm oder 6 x 5 cm oder 5 x 5 cm.

Es sollte klar sein dass die Maschen nicht quadratisch sein brauchen sondern auch eine länge aufweisen können die die Breite weit übersteigt, wie z.B. 30 x 10 cm oder 30 x 7 cm oder 20 x 10 cm oder 20 x 7 cm usw.

Ein Kriterium für den zu wählenden Abstand der Stäbchen voneinander und der Maschengröße der netzartigen Vorrichtung ist darin zu sehen, dass das Netz einerseits über dem Buchsbaum angebracht, jedoch auch in den Buchsbaum in eine gewünschte Tiefe eingebracht werden kann, d.h. zwischen die äußeren Äste und Blätter. Eine derartige Anordnung in dem Buchsbaum, z. B. an der Peripherie des Geästs, ist insbesondere dazu geeignet, das natürliche Erscheinungsbild der Pflanze weitestgehend beizubehalten.

Um den unterschiedlichen Größen von Buchsbäumen gerecht zu werden, kann der auf oder in die Pflanze letztendlich einzubringende netzartige Aufbau mit den auf einer Seite vorgesehen Vorsprüngen aus vorgefertigten Bahnen mit einheitlichen Abmessungen, d.h. einer bestimmten Breite, beispielsweise 50 cm oder 1 oder 2 m oder mehr, und ggf. auch mit einer bestimmten Länge, wie z.B. 1 m , 2 m, 3 m, 4 m oder 5 m usw., durch Verbinden der vorgefertigten Einheits- bzw. modularen Bahn zu einer gewünschten Größe, hergestellt werden. Zur Verbindung der Einheits-Bahnen können an bestimmten Stellen des netzartigen Aufbaus Befestigungsmittel vorgesehen sein, wie, ohne darauf beschränkt zu sein, Haken und Ösen/Löcher usw.. Die Haken können dabei ausgestaltet sein, direkt mit einer Masche einer benachbart angeordneten Bahn in Eingriff zu kommen oder vorzugsweise mit einem darin vorgesehenen Befestigungsmittel, wie einer Öse/einem Loch, die/das verstärkt und ggf. mit einer Rückziehsperre versehen sein kann, um ein Auseinanderziehen nach Erstellung zu verhindern oder zu erschweren. Gemäß einer bevorzugten Ausführungsform ist der netzartige Aufbau derart flexibel, dass die Einheitsbahnen durch einfaches Verbiegen der Ränder und Ineinanderhaken miteinander verbunden werden können. Durch Aneinanderreihen und Befestigen mehrerer derartiger Einheits-Bahnen aneinander können somit einfach Netze mit einer Größe je nach Bedarf vom Nutzer hergestellt werden.

Das Netz selbst kann aus jedem Material hergestellt sein, das eine ausreichende strukturelle Festigkeit liefert, um als körperliche Einheit über bzw. in dem Buchsbaum zu bestehen, den äußeren Umwelteinflüssen der darauf vorgesehen Vorsprüngen/ Stäbchen zu widerstehen, auch den Vorsprüngen/Stäbchen permanenten Halt zu geben, und das gleichzeitig eine Verformbarkeit erlaubt, um sich über bzw. in der Pflanze an deren strukturelle Gegebenheiten anzupassen. Das Netz kann somit aus natürlichen Materialien, wie Hanf, oder Rosshaar usw. hergestellt werden oder auch Kunststoffen. Darüber hinaus kann auch Draht, welcher vorzugsweise zum Schutz vor Korrosion mit einer Schutzschicht, wie einem Kunststoff, überzogen sein kann, zur Herstellung des erfindungsgemäßen netzartigen Aufbaus verwendet werden. Es ist klar, dass in Abhängigkeit von der strukturellen Festigkeit des eingesetzten Materials die Strangdicke des netzartigen Aufbaus entsprechend gewählt wird, um die vorstehenden Eigenschaften zu ermöglichen. So wird bei Einsatz von Draht die Strangdicke geringer gewählt, als z.B. bei Einsatz eines weniger festen Materials, wie Hanf.

Die erfindungsgemäß auf dem netzartigen Aufbau vorzusehenden Vorsprünge bzw. Abwehrstäbchen können aus dem gleichen Material wie das Netz selbst hergestellt werden oder auch aus einem unterschiedlichen Material. So kann bei einer natürlichen Ausführungsform das Netz selbst aus Hanf bestehen, während die Vorsprünge aus Stroh oder Holzstäbchen und dergleichen gefertigt sind. Alternativ können bei Einsatz von Kunststoffen der netzartige Aufbau und die Vorsprünge/Abwehrstäbchen einstückig aus einem Material durch beispielsweise Spritzgiessen hergestellt werden, was auch bei dem Überzug eines aus Draht bestehenden Netzes als Grundkörper mit einem Kunststoff mit gleichzeitiger Bildung von Vorsprüngen/Abwehrstäbchen erfolgen kann.

Die Farbe des netzartigen Aufbaus bzw. der Vorsprünge/Abwehrstäbchen ist nicht beschränkt, sollte jedoch im Hinblick auf einen Erhalt des optischen Erscheinungsbildes des Buchsbaumes so natürlich wie möglich gewählt werden, d.h. in Tarnfarbe, wie grün mit oder ohne braun-graue Schattierungen, kann jedoch auch durchsichtig gehalten sein. Dadurch wird insbesondere bei leichtem Versenken des Netzes in z.B. der Geäst-Peripherie, der netzartige Aufbau im Wesentlichen unsichtbar sein und der Buchsbaum behält sein natürliches Erscheinungsbild, da die herausstehenden Vorsprünge/Abwehrstäbchen visuell nicht hervortreten.

Das vorstehend aufgeführte modulare System, Bereitstellung eines Netz-Grundkörpers mit einer bestimmten Breite, dessen Länge ebenfalls vorbestimmt sein kann oder beim Kauf entsprechend bemessen und zugeschnitten wird, hat, neben dem Vorteil einer Berücksichtigung der unterschiedlichen Größen und ggf. auch Formen von Buchsbäumen, den weiteren Vorteil einer einfacheren Herstellung, da beispielsweise beim Spritzgiessen eines aus Kunststoff herzustellenden Netz-Grundkörpers, lediglich eine Gieß-Form zur Herstellung eines einzigen Grundkörpers vorgesehen werden muss, mit z.B. einer Breite von 1 m und einer Länge von 1,5 m oder 2 m, aus dem durch modularen Aufbau ein mit Vorsprüngen/Abwehrstäbchen versehenes Netz zum Schutz von Buchsbäumen aller Größen und Formen erstellt werden kann.

Die die Abwehrstäbchen tragende Grundstruktur, die auch als runder, dreieckiger, viereckiger oder mehreckiger Stab ausgebildet sein kann, wird mit einem Ende ins Erdreich eingebettet. Der Stab selbst kann aus jedem ausreichend stabilen Material hergestellt werden, das geeignet ist, diesen durch die Pflanze ins Erdreich zu führen und stabil eine Trägerfunktion für die Vorsprünge darauf auszuüben. Der Stab weist entlang seiner Länge auf im Wesentlichen einer, zwei oder mehr Seiten, je nach Ausgestaltung, Vorsprünge oder auch nur Vertiefungen zum Anbringen der Vorsprünge auf. Die Vorsprünge bzw. Vertiefungen können dabei der Länge nach parallel oder seitlich versetzt angeordnet sein. Die in verschiedenen Abständen oder auch mehrfach punktgleich angebrachten Vorsprünge können beweglich, jedoch ausreichend stabil zur individuellen Anpassung an den Pflanzenkörper ausgestaltet sein. Auch feste vorgefertigte Vorsprünge, die im Ergebnis dieselben Anforderungen erfüllen sind im Bereich der vorliegenden Erfindung. Die Vorsprünge können dabei gemäß einer bevorzugten Ausführungsform an den Stäben in einem Winkel von bis zu max. ca. 160 ° vorgesehen sein, z. B. 120 ° oder 90 °, was die Anbringung der Stäbe mit Ausrichtung der Vorsprünge in die Peripherie der Pflanze erleichtert.

Bei der individuellen Gestaltung der Vorsprünge ist es angezeigt, mit Handkraft bewegliche, jedoch stabile Vorsprünge und leicht verkürzbare Vorsprünge vorzusehen, damit bei jeder Pflanzenform das zur Netzgrundkonstruktion beschriebene Ergebnis (Abwehr der Landemöglichkeit des Falters durch passende Abstände der Vorsprünge) erreicht werden kann. So kann auch bei künstlerisch gestalteten Büchsbaumzuschnitten, wie Tierkörperformen usw. eine Abwehr durch individuelle Gestaltung der Abwehrstäbchen leicht durch den Anwender selbst hergestellt werden.

Auch die stabförmige Ausführungsform kann modular ausgestaltet sein, d.h. z.B. Stäbe mit einer bestimmten Einheitslänge, die ineinander zur Verlängerung des Gesamtaufbaus gesteckt werden können.

Die vorliegende Erfindung betrifft weiter ein Verfahren bei dem die erfindungsgemäße Vorrichtung über einem Buchsbaum angeordnet oder darin, d.h. in das Geäst, vom dem äußeren Umfang der Pflanze zurückversetzt eingebracht wird. Gemäß einer bevorzugten Ausführungsform wird das Netz leicht in das Geäst in der Peripherie des Buchsbaums eingedrückt, so dass die Vorsprünge/Abwehrstäbchen das Niederlassen des Baumzünslers verhindern, jedoch die Grundkonstruktion der netzartigen Vorrichtung nicht mehr optisch in Erscheinung tritt. Die dornenförmigen Abwehrstäbchen ragen nach Anbringen der Netzvorrichtung im peripheren Blätterwerk der Pflanze umfassend aus der Pflanze hervor und hindern auf diese Weise den Falter an der Landung zum Zwecke der Eiablage.

Gleichermaßen kann der stabförmige Aufbau etwas von der Peripherie der Pflanze zurückversetzt, durch das Geäst der Pflanze hindurch in das Erdreich eingebracht werden, so dass die Vorsprünge aus dem Geäst und den Blättern hervorstehen. Derartige Stäbe sind insbesondere bei nicht symmetrisch geschnittenen Buchspflanzen vorteilhaft.

## Patentansprüche

1. Vorrichtung zum Schutz von Buchsbäumen vor einem Befall mit dem Baumzünsler, welche eine Grundstruktur mit darauf in im Wesentlichen eine Richtung ausgerichtete Vorsprünge umfasst, und die Grundstruktur einen netzförmigen oder stabförmigen Aufbau aufweist, wobei die der Grundstruktur abgewandten Enden der Vorsprünge einen Abstand von maximal 200 mm voneinander aufweisen, worin die Grundstruktur derart flexibel ausgestaltet ist, dass diese innerhalb des äußeren Blätterwerks zwischen Blättern und Ästen angeordnet werden, und, worin der netzförmige oder stabförmige Aufbau der Grundstruktur eine Maschengröße von 30 x 30 cm bis 5 x 5 cm aufweist.

2. Vorrichtung nach Anspruch 1, worin die der Grundstruktur abgewandten Enden der Vorsprünge einen Abstand voneinander im Bereich von 50 - 150 mm, vorzugsweise 50 - 100 mm aufweisen und/oder eine Länge von zwischen 5 - 300 mm, vorzugsweise 5 - 100 mm aufweisen.

3. Vorrichtung nach einem der Ansprüche 1 oder 2, worin die Vorsprünge auf der Grundstruktur unterschiedliche Längen aufweisen und/oder flexibel sind.

4. Vorrichtung nach einem der vorstehenden Ansprüche, worin die der Grundstruktur abgewandten Enden der Vorsprünge spitz oder T-förmig oder X-förmig sind oder die Form einer Krone aufweisen.

5. Vorrichtung nach einem der vorstehenden Ansprüche, worin die Grundstruktur modular ausgeführt ist.

6. Vorrichtung nach einem der vorstehenden Ansprüche, **dadurch gekennzeichnet, dass** die Grundstruktur und die Vorsprünge grün ist.

7. Verfahren zum Schutz von Buchsbäumen vor dem Baumzünsler, wobei eine Vorrichtung gemäß einem der vorstehenden Ansprüche über, an oder in einem Buchsbaum angeordnet wird, so dass der Baumzünsler sich nicht auf dem Buchsbaum niederlassen kann.

8. Verfahren nach Anspruch 7, wobei die Grundstruktur in dem peripheren Umfang des Geästs angeordnet wird, so dass es von außen optisch im Wesentlichen nicht sichtbar ist.

## Claims

1. Device for protecting box trees from infestation by the box tree moth, comprising a base structure with projections aligned thereon in substantially one direction, wherein the base structure has a net-shaped or rod-shaped structure, the ends of the projections facing away from the base structure having a maximum distance of 200 mm from each other, wherein the base structure is designed to be flexible such that these are arranged within the outer foliage between leaves and branches, and wherein the net-shaped or rod-shaped structure of the base structure has a mesh size of 30 x 30 cm to 5 x 5 cm.

2. Device according to claim 1, wherein the ends of the projections facing away from the base structure have a distance from each other in the range of 50 - 150 mm, preferably 50 - 100 mm, and/or have a length of between 5 - 300 mm, preferably 5 - 100 mm.

3. Device according to any one of claims 1 or 2, wherein the projections on the base structure have different lengths and/or are flexible.

4. Device according to any one of the preceding claims, wherein the ends of the projections facing away from the base structure are pointed or T-shaped or X-shaped or have the shape of a crown.

5. Device according to any one of the preceding claims, wherein the base structure is modular.

6. Device according to any one of the preceding claims, **characterized in that** the base structure and the projections are green.

7. Method for protecting box trees from the box tree moth, wherein a device according to any one of the preceding claims is arranged above, on or in a box tree so that the box tree moth cannot land on the box tree.

8. Method according to claim 7, wherein the base structure is arranged in the periphery of the branch so that it is substantially not visible from the outside.

## Revendications

1. Dispositif de protection de buis contre une infestation par la pyrale du buis, qui comprend une structure de base avec des saillies orientées essentiellement dans une direction, et la structure de base présente une structure en forme réticulaire ou de barre, les extrémités des saillies opposées à la structure de base présentant une distance maximale de 200 mm entre elles, dans lequel la structure de base est conçue de manière flexible de telle sorte qu'elle soit disposée à l'intérieur du feuillage extérieur entre les feuilles et les branches, et dans lequel la structure réticulée ou en forme de tige de la structure de base présente une taille de maille de 30 x 30 cm à 5 x 5 cm.

2. Dispositif selon la revendication 1, dans lequel les extrémités des saillies opposées à la structure de base présentent une distance les unes des autres comprise entre 50 et 150 mm, de préférence entre 50 et 100 mm, et/ou une longueur comprise entre 5 et 300 mm, de préférence entre 5 et 100 mm.

3. Dispositif selon l'une des revendications 1 ou 2, dans lequel les saillies sur la structure de base ont des longueurs différentes et/ou sont flexibles.

4. Dispositif selon l'une des revendications précédentes, dans lequel les extrémités des saillies opposées à la structure de base sont pointues ou en forme de T ou de X ou ont la forme d'une couronne.

5. Dispositif selon l'une des revendications précédentes, dans lequel la structure de base est modulaire.

6. Dispositif selon l'une des revendications précédentes, **caractérisé en ce que** la structure de base et les saillies sont vertes.

7. Procédé de protection des buis contre la pyrale du buis, dans lequel un dispositif selon l'une des revendications précédentes est placé au-dessus, sur ou dans un buis, de sorte que la pyrale du buis ne puisse pas se poser sur le buis.

8. Procédé selon la revendication 7, dans lequel la structure de base est placée dans la périphérie du branchage de sorte qu'elle soit essentiellement invisible visuellement de l'extérieur.
